# EUROPEAN PATENT SPECIFICATION

(11) **EP 0 763 711 B1**
(45) Date of publication and mention of the grant of the patent: **14.11.2001**
(21) Application number: 96306271.6
(22) Date of filing: 29.08.1996
(51) Int. Cl.: G01B 5/008, G01B 5/016

(54) **Manual three dimensional coordinate measuring machine**
Manuelle 3D-Koordinatenmessmaschine
Machine manuelle de mesure de coordonnées 3D

(30) Priority: 18.09.1995 JP 23837295
(43) Date of publication of application: 19.03.1997
(73) Proprietor: MITUTOYO CORPORATION, Kawasaki, Kanagawa 213 (JP)
(72) Inventor: Tezuka, Kazusaku, Takatsu-ku, Kawasaki, Kanagawa 213 (JP); Oneta, Takao, Utsunomiya Tochigi 321 (JP)
(74) Representative: Skone James, Robert Edmund

(56) References cited:
- EP-A- 0 568 120
- CH-A- 683 947
- DE-A- 2 356 030
- FR-A- 2 512 543
- FR-A- 2 564 579

## Description

The present invention relates to coordinate measuring machines. In particular, the present invention relates to a manual or floating-type coordinate measuring machine, of which a probe is movable along three orthogonal coordinate axes, X, Y and Z, the Z axis member provided with the probe is manually moved along the three coordinate axes, and the size and shape of a workpiece is determined by the displacements of three axes when the probe comes in contact with the workpiece.

Manual three dimensional coordinate measuring machines have been known, of which a probe is movable along three orthogonal coordinate axes, X, Y and Z, an operator manually moves a tip or bottom of the Z axis member provided with the probe, and the size and shape of a workpiece is determined by the displacements along the three axes when the probe comes in contact with the workpiece.

In such manual three dimensional coordinate measuring machines, their structures are simpler than those of automatically driving coordinate measuring machines, which are automatically movable along three axes by means of driving mechanisms provided with these axes, and their probes are rapidly movable toward a given direction or place by the hand of the operator. On the other hand, such a manual operation causes some problems at the same time: A force is applied to the tip at one end of the Z axis member to generate the deflection of the Z axis member; the forces applied to the tip during operation vary from operator to operator so that the accuracy decreases, because each operator moves the Z axis member with his own velocity or acceleration. Additionally, in manual three dimensional coordinate measuring machines provided with air bearings as sliding mechanisms for three axes, the accuracy decreases due to the gap variation by air.

The decrease in the deflection of the Z axis member is proposed in Japanese Unexamined Patent Publication No. 54-101763, titled "An apparatus for imparting an auxiliary force for movement to a coordinate measuring machine'. The apparatus is characterized as follows: At the bottom of the Z axis member provided with a probe or sensing element, a pair of blade springs are provided parallel to the Z axis such that each blade spring top is fixed to the Z axis and the blade spring bottom can be displaced in the X axis; a handling flange is provided at the bottom of the parallel blade springs; an X axis movement sensor comprising two limit switches opposed to their respective blade springs for sensing the their movements and a Y axis movement sensor having the same configuration are provided perpendicular to the Z axis; and apparatuses for imparting auxiliary forces on two axes are provided, in which air is jetted in the reverse direction of the movement detected by such movement sensors to impart a thrust smaller than the frictional resistance in such a direction.

When the probe is moved in the X axis and Y axis directions while holding the handling flange, the blade springs are displaced toward such directions to jet air in the reverse direction of the movement. Thus, hysteresis error due to the deflections in the X and Y directions can be eliminated and thus the accuracy can improve.

Because the configuration set forth above, however, requires the X axis and Y axis movement sensors each having a pair of parallel blade springs and the apparatuses for imparting auxiliary forces, i.e., thrusts smaller than the respective frictional resistances, the structure of the apparatus *is* complicated and the deflection further increases due to the increased weight of the apparatus provided for each axis. Further, because two X axis and Y axis movement sensors with blade springs must be provided perpendicular to the Z axis, the structure is further complicated.

Moreover, because the configuration set forth above intends the elimination of the hysteresis error due to the X axis and Y axis deflections formed when the Z axis member moves, in other words, formed by the movement from the static state, the moving direction must be detected before the Z axis member moves in the X axis or Y axis direction. Thus, the parallel blade springs of the movement sensor must be displaced by a small force. However, the Z axis member moves with a great deflection of the blade springs, resulting in the contact of the probe with the workpiece. Thus, the forces applied to the tip of the Z axis member vary from operator to operator and the accuracy in the measurement lowers.

US-A-4578873 discloses a measuring machine having a probe which contacts a workpiece in use, the probe being moved by the operator across the workpiece while the probe support includes springs to control the force needed to move the probe.

In accordance with the present invention, a manual three dimensional coordinate measuring machine in which a probe is provided so as to be movable along three orthogonal coordinate axes, X, Y and Z, a Z axis member provided with said probe is moved along the three axes by manual operation, and the size and shape of a workpiece is determined by the displacements along the three-axes when said probe comes in contact with the workpiece, the arrangement being characterized by
a probe adaptor for holding said probe;
a slide ring provided at the bottom side of said Z axis member and at the periphery of said probe adaptor so that the slide ring is able to move in any direction in a plane perpendicular to said Z axis, said slide ring being held at a predetermined rest position in said plane relative to the Z axis member; and
an elastic member provided between said slide ring and said probe adaptor, said elastic member being arranged such that, when at rest, said slide ring is held at the predetermined rest position on said plane, whereby manually controlled movement of the slide ring causes movement of the Z axis member via the elastic member and wherein the application to the slide ring of a force larger than a predetermined value in an arbitrary direction in the plane, causes the slide ring to move along said plane by means of elastic deformation of said elastic member.

The present invention provides a manual three dimensional coordinate measuring machine having a simplified structure and an improved accuracy of the measurement not depending on the operator.

The present invention also provides a manual three dimensional coordinate measuring machine enabling a manual operation such that a probe comes in contact with a workpiece while suppressing the acceleration to a predetermined value or less just before the probe comes in contact with the workpiece.

The manual three dimensional coordinate measuring machine achieves the measurement with a high accuracy by automatically eliminating the data obtained from the contact of the probe with the workpiece at a large acceleration.

According to such a structure, the probe comes in contact with the workpiece in the measurement while holding the slide-ring and moving the probe along three coordinate axes. When the probe is moved along the X axis and Y axis, a force larger than a predetermined value acts on the slide ring along the plane (XY plane) perpendicular to the Z axis, and the elastic member is elastically deformed. Thus, the operator holding the slide ring can perceive the deformation of the slide ring. Because the probe can come in contact with the workpiece while decreasing the velocity of the probe so that the elastic member is elastically deformed, in other words, suppressing the acceleration to a predetermined value or less, just before the probe comes in contact with the workpiece, a force acting on the slide ring (or a force from the plane perpendicular to the Z axis) can be readily maintained at a predetermined value or less. Thereby, the variation of the measurement depending on the operator can be decreased. Further, the structure is simplified by the combination of the slide ring with the elastic member.

In the manual three dimensional coordinate measuring machine set forth above, the slide ring is preferably provided at the bottom of the Z axis member and at the periphery of the probe adaptor which detachably holds the probe, and the elastic member is provided between the slide ring and the probe adaptor. By such a structure, the slide ring can be attached to the Z axis member without any additional work, the probe can be detachably held on the Z axis member of an existing manual three dimensional coordinate measuring machine, and thus the machine can be fabricated with a low cost.

In the manual three dimensional coordinate measuring machine set forth above, an annunciating means for informing a predetermined amount of movement of the slide ring is preferably provided. By such a structure, the probe can come in contact with the workpiece while watching with the annunciating means that the slide ring moves by a predetermined amount.

In the manual three dimensional coordinate measuring machine set forth above, an error preventing means is preferably provided, for canceling the procedure to input displacements along three coordinates based on the touch signal informing the contact of the probe with the workpiece when the slide ring moves by a predetermined amount. By such a structure, the data is automatically canceled when the probe comes in contact with the workpiece at a substantial acceleration, resulting in the improvement in accuracy.

Preferred embodiments of the present invention will be described with reference to the accompanying drawings, wherein:
Fig. 1 is an isometric view illustrating the outline of a manual three dimensional coordinate measuring machine in accordance with the present invention;
Fig. 2 is a cross-sectional elevation view illustrating a probe adaptor section in a first embodiment in accordance with the present invention;
Fig. 3 is a plan view illustrating the probe adaptor section shown in Fig. 2;
Fig. 4 is a cross-sectional elevation view illustrating a probe adaptor section in a second embodiment in accordance with the present invention;
Fig. 5 is a block diagram illustrating an annunciating means and an error preventing means in the second embodiment of the present invention;
Fig. 6 is a cross-sectional elevation view illustrating a probe adaptor section in a third embodiment in accordance with the present invention;
Fig. 7 is a plan view illustrating the probe adaptor section shown in Fig. 6; and

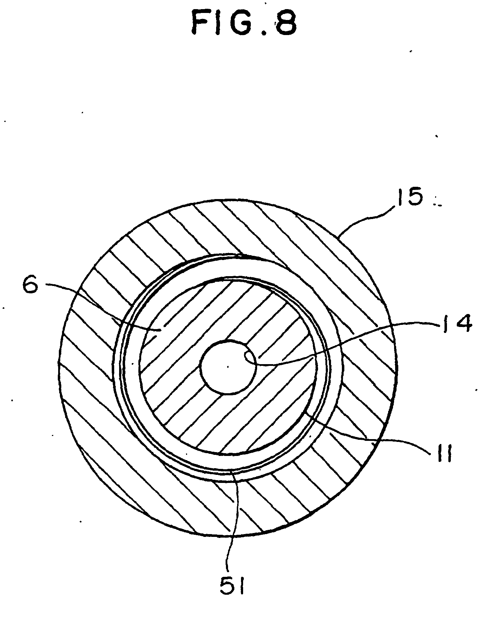

Fig. 8 is a cross-section view illustrating another embodiment of the elastic member used in the present invention.

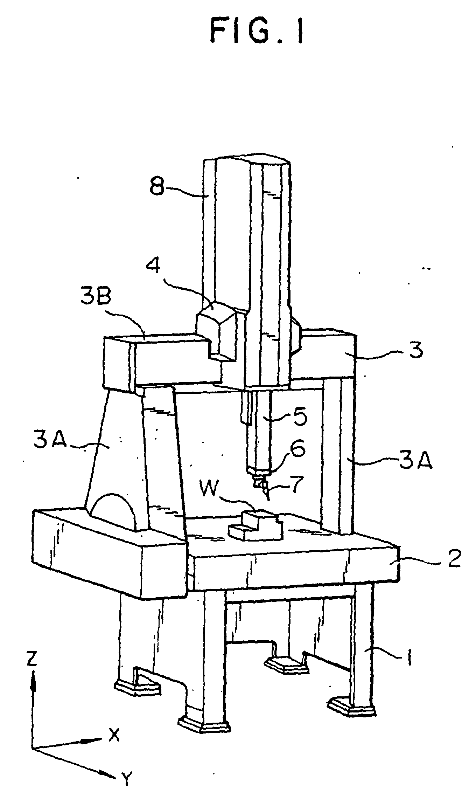

A first embodiment in accordance with the present invention will be shown in FIGs. 1 to 3. As shown in FIG. 1, the manual three dimensional coordinate measuring machine of the first embodiment comprises a stand 1, a table 2 provided on the stand 1 for placing a workpiece W, a gate type column 3 which is movable along the front and the rear of the table 2 or along the Y coordinate axis, an X axis slider 4 which is movable along the left and the right of an X axis beam 3B of the gate type column 3 or along the X coordinate axis, a Z axis spindle 5 as a Z axis member which is vertically movable along the X axis slider 4 or along the X coordinate axis, and a probe 7 which is detachably provided at the bottom of the Z axis spindle through a probe adaptor 6. A balancer 8 is provided for balancing the weight of the Z axis spindle 5.

Air bearings are provided between the table 2 and the both legs 3A of the gate type column 3, between the X axis beam 3B and the X axis slider 4, and between the X axis slider 4 and the Z axis spindle 5. Thereby, the gate type column 3, X axis slider 4 and Z axis spindle 5 can be manually moved with a slight force. When the probe 7 comes in contact with the workpiece W while moving three orthogonal coordinate axes, i.e., X, Y and Z axis, displacements of these axes are input from a displacement detector (not shown in the figures) in response to the touch signal, and the size and shape of the workpiece W are determined based on these displacement data.

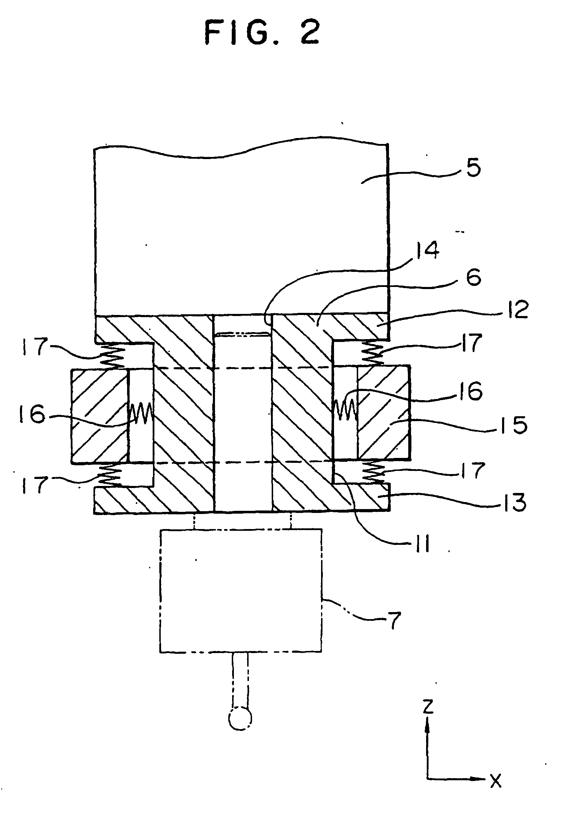

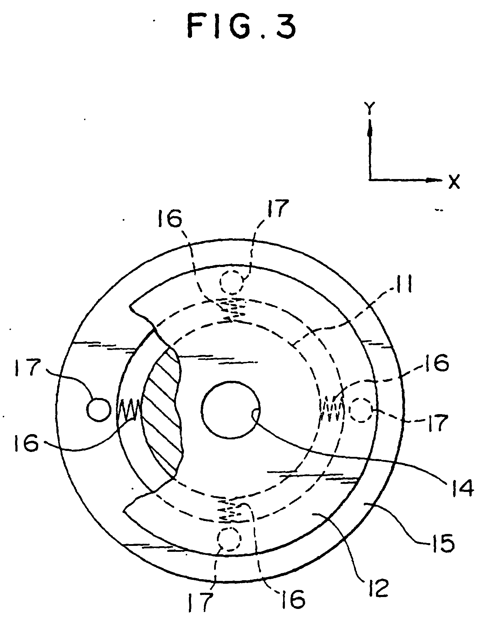

As shown in FIGs. 2 and 3, the probe adaptor 6 comprises a cylinder body 11, and flanges 12 and 13 which are monolithically formed with the body 11 and have a larger diameter than the body 11, and a holding hole 14 which is pierced from the flange 12 to the flange 13 through the center of the body 11 and detachably holds the probe 7. An annular slide ring 15 is provided on the outside of the Z spindle 5 so that the slide ring 15 can move in any directions in the plane (or XY plane) perpendicular to the Z axis and along the Z axis (or along the axis of the Z axis spindle 5). The travel limits of the slide ring 15 in the XY plane and in the Z axis direction are set to a value, for example around 2 mm, in which the operator can perceive by hand the movement of the slide ring 15 when moving the Z axis spindle by holding the slide ring with hand.

Compressed coil springs 16 as elastic members are provided between the outside of the slide ring 15 and the inside of the body 11 at intervals of 90 degrees, for holding the slide ring 15 at a predetermined position in the XY plane and for allowing the slide ring 15 to move in the XY plane as a result of elastic deformation caused by a force larger than a predetermined value, applied to the slide ring 15 in an arbitrary direction in the XY plane. Further, compressed coil springs 17 as elastic members are provided between the top end of the slide ring 15 and the flange 12 and between the bottom end of the slide ring 15 and the flange 13 at intervals of 90 degrees, for holding the slide ring 15 at a predetermined position of the Z axis and for allowing the slide ring 15 to move in the Z axis as a result of elastic deformation caused by a force larger than a predetermined value, applied to the slide ring 15 along the Z axis.

In the first embodiment, the operator lets the probe 7 come in contact with the workpiece W while holding the slide ring 15 with one hand and manually moving the probe 7 along the X axis and the gate type column 3 along the Y axis. In the moving process of the probe 7, when the velocity or acceleration of the probe 7 exceeds the predetermined value, a force higher than the predetermined value acts on the slide ring 15, and thus the compressed coil springs 16 and 17 are elastically deformed. For example, when a force higher than the predetermined value acts on the slide ring in an arbitrary direction in the XY plane, the compressed coil spring 16 is elastically deformed.

Where the operator holding the slide ring 15 can perceive the movement of the slide ring 15. Thus, the operator can control the force when the probe comes in contact with the workpiece W by reducing the velocity so that the compressed coil springs 16 and 17 are elastically deformed just before the probe comes in contact with the workpiece W. The deflection of the Z axis spindle 5 along the X and Y axes and the deflection of the X axis beam 3B along the Y axis can be suppressed. Further, because of the floating variations of the X axis slider 4 and the gate type column 3, a high accuracy measurement can be achieved.

The structure comprising the slide ring 15 and compressed coil springs 16 and 17 is significantly simplified. In particular, the slide ring 15 movable along the XY plane and the Z axis is extremely simplified compared with the prior art structure set forth above having two movement sensor with parallel blade springs at intervals of 90 degrees in the Z axis direction. Further, the slide ring 15 is provided on the outside of the probe adaptor 6 detachably holding the Z axis spindle 5, so no additional working is required for attaching the slide ring 15 to the Z axis spindle 5, and the probe adaptor can be used for any existing manual three dimensional coordinate measuring machine with a reduced cost.

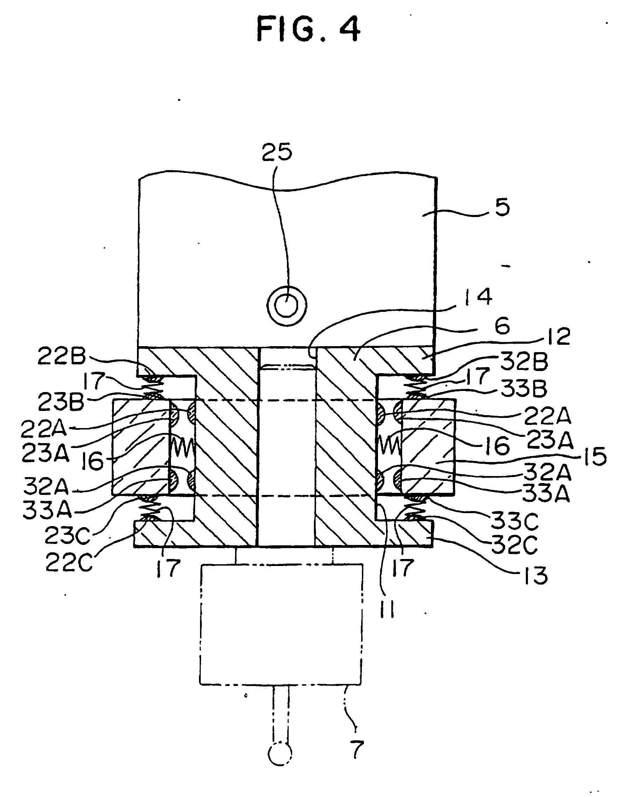

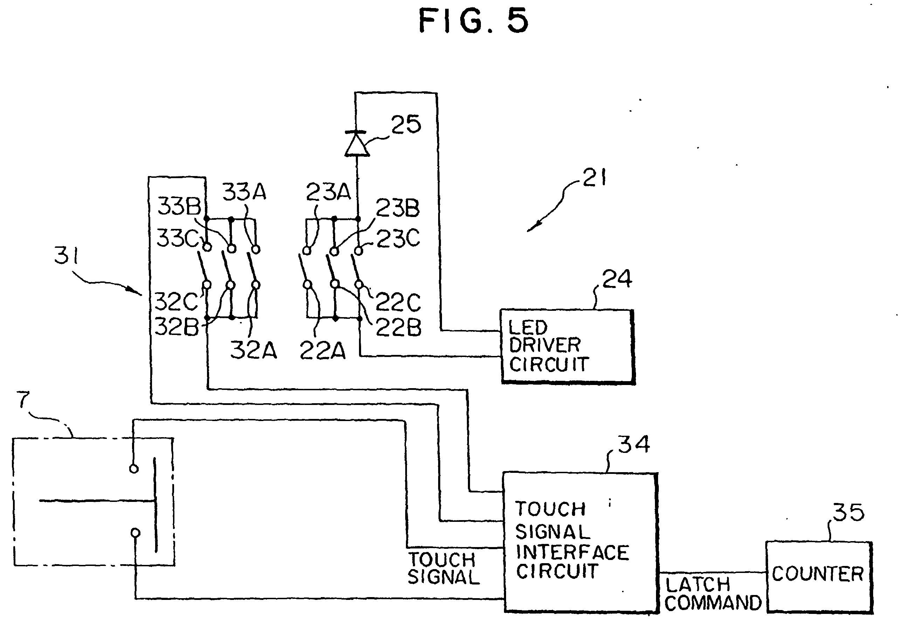

FIGs. 4 and 5 shows a second embodiment in accordance with the present invention. Differing from the first embodiment, the apparatus of the second embodiment further comprises an annunciation circuit 21 as an annunciation means for informing a predetermined moving of the slide ring 15, and an error preventing circuit 31 as an error preventing means for canceling the procedure which inputs displacements along three coordinates based on the touch signal submitted when the probe comes in contact with the workpiece.

As shown in FIG. 4, the annunciation circuit 21 includes a first fixed contact 22A provided at the periphery of the body 11 of the probe adaptor 6, a second fixed contact 22B provided at the bottom face of the flange 12, a third fixed contact 22C provided at the top face of the flange 13, a first moving contact 23A, a second moving contact 23B, and a third moving contact 23C, in which each moving contact comes in contact with its respective fixed contact when the slide ring 15 moves in the XY plane and the Z axis in the predetermined displacement. The annunciation circuit 21 further includes an LED driver circuit (24) and an LED 25 which is positioned at the bottom of the Z axis spindle and emits following the connection of the fixed and moving contacts.

As shown in FIG. 4, the error preventing means includes a first fixed contact 32A provided at the periphery of the body 11 of the probe adaptor 6, a second fixed contact 32B provided at the bottom face of the flange 12, a third fixed contact 32C provided at the top face of the flange 13, a first moving contact 33A, a second moving contact 33B, and a third moving contact 33C, in which each moving contact comes in contact with its respective fixed contact when the slide ring 15 moves in the XY plane and the Z axis in the predetermined displacement. The error preventing means further includes a touch signal interface circuit 34, which cancels the procedure for sending a latch command to a counter 35, for displaying the displacements along three coordinates, based on the touch signal, when the fixed and moving contacts come in contact with each other.

In the second embodiment, when the slide ring 15 moves by the predetermined value in the moving process of the probe 7, the LED 25 in the annunciation circuit 21 emits. Thus, the operator can let the probe 7 come in contact with the workpiece W while controlling the movement of the slide ring so that the LED 25 does not emit. In such a way, the force acting on the slide ring 15 is suppressed to the predetermined value or less, and thus the measurement accuracy can be securely improved.

Even if the probe 7 comes in contact with the workpiece W when the LED 25 emits, the displacements along the three coordinates are canceled by means of the error preventing circuit 31, and thus the measurement involving an essential error can be prevented.

Each of the annunciating circuit 21 and the error preventing circuit 31 has a simplified configuration as set forth above. Further, the fixed and moving contact group of the annunciating circuit 21 and the contact group of the error preventing circuits 31 can be used in common. For example, the fixed contacts 22A, 22B and 22C and the moving contacts 23A, 23B and 23C are connected to the touch signal inter face 34, as well as to the LED driver circuit. The fixed contacts 32A, 32B and 32C and the moving contacts 33A, 33B and 33C can be eliminated thereby, resulting in the simplified circuit configuration.

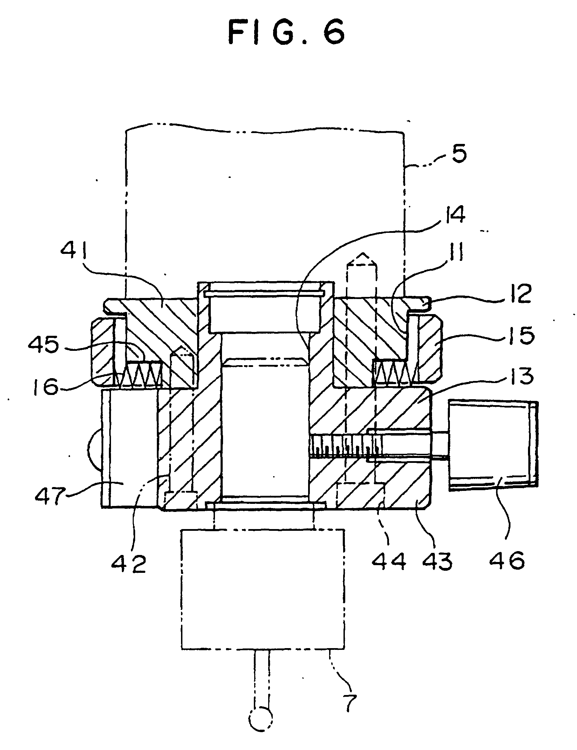

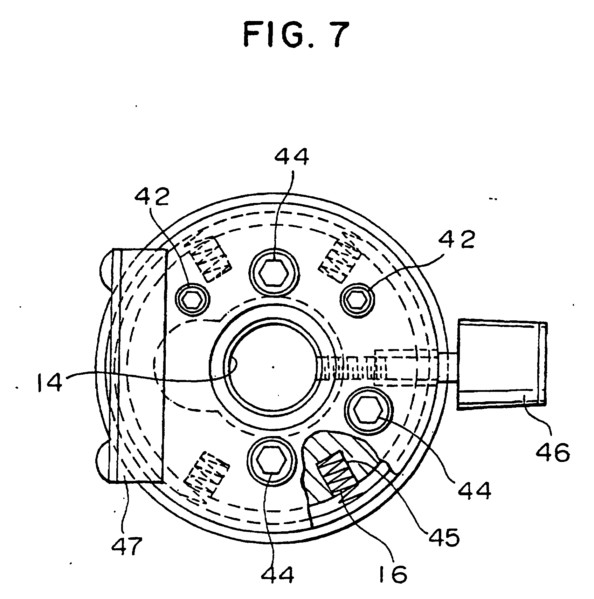

FIGs. 6 and 7 show a third embodiment in accordance with the present invention. In this embodiment, the slide ring 15 can move only in the XY plane. The probe adaptor 6 comprises a probe holding member 43 having a flange 13 and a holding hole 14, and is fixed at the bottom face of a ring mounting member 41 having a body 11 and a flange 12 with two bolts 42. These are mounted at the bottom face of the Z axis spindle 5 with three bolts 44.

The ring mounting member 41 has four spring holding holes 45 for fixing the compressed coil springs 16.
Further, a clamping screw 46 is screwed in the probe holding member 43 to clamp the shank of the probe 7 inserted into the holding hole 14, and the probe holding member 43 is provided with a connector case 47 for passing the wire from the probe 6 through toward the Z axis spindle 5.

According to the third embodiment, the deflection of the Z axis spindle in the X and Y axis directions and the deflection of the Z axis beam in the Y direction can be reduced due to the movement of the slide ring 15 only in the XY plane.

Although the present invention has been described in its preferred form, it is understood that the present invention is not limited to the preferred form.

For example, the slide ring 15 can be directly attached to the bottom of the Z axis spindle 5, differing from the embodiments set forth above in which the probe adaptor 6 is provided between the slide ring 15 and the bottom of the Z axis spindle 5.

The plan view of the slide ring 15 may be square other than circular. Each of the compressed coil springs 16 and 17 as the elastic member can be replaced with a blade spring, rubber, wire and the like. When using a wire, the wire 51 is spirally coiled along the periphery of the body 11 of the probe adaptor 6 and one end of the wire is fixed to the probe adaptor 6 and the other end is fixed to the slide ring 15.

## Claims

1. A manual three dimensional coordinate measuring machine in which a probe (7) is provided so as to be movable along three orthogonal coordinate axes, X, Y and Z, a Z axis member (5) provided with said probe (7) is moved along the three axes by manual operation, and the size and shape of a workpiece is determined by the displacements along the three axes when said probe comes in contact with the workpiece, the arrangement being **characterized by**
a probe adaptor (6) for holding said probe (7);
a slide ring (15) provided at the bottom side of said Z axis member (5) and at the periphery of said probe adaptor (6) so that the slide ring is able to move in any direction in a plane perpendicular to said Z axis, said slide ring (15) being held at a predetermined rest position in said plane relative to the Z axis member; and
an elastic member (16,17) provided between said slide ring (15) and said probe adaptor (6), said elastic member (16,17) being arranged such that, when at rest, said slide ring (15) is held at the predetermined rest position on said plane, and arranged such that manually controlled movement of the slide ring causes movement of the Z axis member via the elastic member and arranged such that the application to the slide ring (15) of a force larger than a predetermined value in an arbitrary direction in the plane, causes the slide ring to move along said plane by means of elastic deformation of said elastic member (16,17).

2. A manual three dimensional coordinate measuring machine according to claim 1, wherein said probe adaptor (6) detachably holds said probe (7).

3. A manual three dimensional coordinate measuring machine according to claim 2, further comprising an annunciating means (21) for indicating when the slide ring (15) has moved by a predetermined amount relative to the Z axis member.

4. A manual three dimensional coordinate measuring machine according to claim 3, wherein said annunciating means (21) comprises first, fixed contacts (22A) provided at said probe adaptor (6), second contacts (22A) provided at said slide ring (15), the contacts positioned so as to come into contact with each other when the slide ring moves relative to the Z axis member by said predetermined amount, and an LED (25) which is activatable when said first and second contacts come in contact with each other.

5. A manual three dimensional coordinate measuring machine according to claim 3, wherein an error preventing means (31) is provided to cancel data defining the displacement of said probe (7) relative to the workpiece when said slide ring moves relative to the Z axis member by the predetermined amount.

6. A manual three dimensional coordinate measuring machine according to claim 5, wherein said error preventing means (31) comprises first, fixed contacts (32A) provided with said probe adaptor, second contacts (33B) provided at said slide ring, the contacts being positioned so as to come into contact with each other when the slide ring moves relative to the Z axis member by a predetermined amount, and a touch signal interface circuit (34) for cancelling the data defining the displacement of the probe when said contacts come in contact with each other.

7. A manual three dimensional coordinate measuring machine according to any of the preceding claims, wherein the axis of said slide ring (15) is maintained approximately parallel to the Z axis during its movement.

## Patentansprüche

1. Manuelle 3D-Koordinatenmeßmaschine, bei der ein Tastkopf (7) so angeordnet ist, daß er längs dreier orthogonaler Koordinatenachsen X, Y und Z verschiebbar ist, ein Z-Achsen-Bauteil (5), das mit dem Tastkopf (7) versehen ist, längs der drei Achsen durch manuelle Betätigung bewegt wird und die Abmessungen und Form eines Werkstücks durch die Verschiebungen längs der drei Achsen bestimmt werden, wenn der Tastkopf mit dem Werkstück in Berührung kommt, wobei die Anordnung **gekennzeichnet ist durch**
einen Tastkopf-Adapter (6) zum Halten des Tastkopfes (7);
einen unterhalb der Unterseite des Z-Achsen-Bauteils (5) und am Umfang des Tastkopf-Adapters (6) so angeordneten Gleitring (15), daß der Gleitring in irgendeiner Richtung in einer senkrecht zur Z-Achse stehenden Ebene bewegbar ist, wobei der Gleitring (15) in einer vorbestimmten Ruhelage in der Ebene relativ zu dem Z-Achsen-Bauteil gehalten wird; und
ein zwischen dem Gleitring (15) und dem Tastkopf-Adapter(6) angeordnetes elastisches Bauteil (16, 17), das so ausgebildet ist, daß, wenn es sich in Ruhe befindet, der Gleitring (15) in der vorbestimmten Ruhelage auf der Ebene gehalten wird, und so ausgebildet ist, daß eine manuell gesteuerte Bewegung des Gleitrings eine Bewegung des Z-Achsen-Bauteils über das elastische Bauteil bewirkt, und so ausgebildet ist, daß die Ausübung einer Kraft auf den Gleitring, die größer als ein vorbestimmter Wert in einer beliebigen Richtung in der Ebene ist, bewirkt, daß der Gleitring **durch** elastische Verformung des elastischen Bauteils (16, 17) in der Ebene bewegt wird.

2. Manuelle 3D-Koordinatenmeßmaschine nach Anspruch 1, bei der der Tastkopf-Adapter (6) den Tastkopf (7) lösbar festhält.

3. Manuelle 3D-Koordinatenmeßmaschine nach Anspruch 2, die ferner ein Anzeigemittel (21) aufweist, das anzeigt, wenn der Gleitring (15) sich um einen vorbestimmten Betrag relativ zu dem Z-Achsen-Bauteil bewegt hat.

4. Manuelle 3D-Koordinatenmeßmaschine nach Anspruch 3, bei der das Anzeigemittel (21) aufweist: erste feststehende Kontakte (22A), die an dem Tastkopf-Adapter (6) vorgesehen sind, zweite Kontakte (23A), die an dem Gleitring (15) vorgesehen sind, wobei die Kontakte so angeordnet sind, daß sie miteinander in Kontakt kommen, wenn sich der Gleitring relativ zu dem Z-Achsen-Bauteil um den vorbestimmten Betrag bewegt, und eine LED (25), die einschaltbar ist, wenn die ersten und zweiten Kontakte miteinander in Kontakt kommen.

5. Manuelle 3D-Koordinatenmeßmaschine nach Anspruch 3, bei der ein Fehlerverhinderungsmittel (31) vorgesehen ist, um Daten zu löschen, die die Verschiebung des Tastkopfes (7) relativ zu dem Werkstück darstellen, wenn sich der Gleitring relativ zu dem Z-Achsen-Bauteil um den vorbestimmten Betrag bewegt.

6. Manuelle 3D-Koordinatenmeßmaschine nach Anspruch 5, bei der das Fehlerverhinderungsmittel (31) aufweist: erste feststehende Kontakte (32A), die an dem Tastkopf-Adapter vorgesehen sind, zweite Kontakte (33A), die an dem Gleitring vorgesehen sind, wobei die Kontakte so angeordnet sind, daß sie miteinander in Berührung kommen, wenn sich der Gleitring relativ zu dem Z-Achsen-Bauteil um einen vorbestimmten Betrag bewegt, und eine Berührungssignal-Interface-Schaltung (34) zum Löschen der die Verschiebung des Tastkopfes darstellenden Daten, wenn die Kontakte miteinander in Kontakt kommen.

7. Manuelle 3D-Koordinatenmeßmaschine nach einem der vorstehenden Ansprüche, bei der die Achse des Gleitrings (15) während seiner Bewegung annähernd parallel zur Z-Achse gehalten wird.

## Revendications

1. Machine de mesure manuelle de coordonnées tridimensionnelles, dans laquelle une sonde (7) est prévue de manière à pouvoir être déplacée le long de trois axes de coordonnées X, Y et Z orthogonaux, un organe (5) d'axe Z doté de ladite sonde (7) est déplacé le long des trois axes par actionnement manuel, et la taille et la forme d'une pièce sont déterminées par les déplacements le long des trois axes lorsque ladite sonde entre en contact avec la pièce, l'agencement étant **caractérisé par**:
un adaptateur pour sonde (6) pour maintenir ladite sonde (7);
une bague coulissante (15) prévue à la partie inférieure dudit organe (5) d'axe Z et à la périphérie dudit adaptateur pour sonde (6), de telle sorte que la bague coulissante peut se déplacer dans une direction quelconque dans un plan perpendiculaire audit axe Z, ladite bague coulissante (15) étant maintenue dans une position de repos prédéterminée dans ledit plan, par rapport à l'organe d'axe Z; et
un organe élastique (16, 17) prévu entre ladite bague coulissante (15) et ledit adaptateur pour sonde (6), ledit organe élastique (16, 17) étant agencé de telle sorte que, lorsqu'il est au repos, ladite bague coulissante (15) est maintenue dans ladite position de repos prédéterminée dans ledit plan, et étant agencé de telle sorte qu'un déplacement commandé manuellement de la bague coulissante entraîne un déplacement de l'organe d'axe Z par l'intermédiaire de l'organe élastique, et étant agencé de telle sorte que l'application sur la bague coulissante (15) d'une force plus grande qu'une valeur prédéterminée dans une direction arbitraire du plan amène la bague coulissante à se déplacer dans ledit plan par l'intermédiaire d'une déformation élastique dudit organe élastique (16, 17).

2. Machine de mesure manuelle de coordonnées tridimensionnelles selon la revendication 1, dans laquelle ledit adaptateur pour sonde (6) retient ladite sonde (7) de manière libérable.

3. Machine de mesure manuelle de coordonnées tridimensionnelles selon la revendication 2, comprenant en outre un moyen d'annonce (21) pour indiquer lorsque la bague coulissante (15) s'est déplacée d'une distance prédéterminée par rapport à l'organe d'axe Z.

4. Machine de mesure manuelle de coordonnées tridimensionnelles selon la revendication 3, dans laquelle ledit moyen d'annonce (21) comprend des premiers contacts fixes (22A) prévus sur ledit adaptateur pour sonde (6), des deuxièmes contacts (23A) prévus sur ladite bague coulissante (15), les contacts étant positionnés de manière à entrer en contact mutuel lorsque la bague coulissante se déplace par rapport à l'organe d'axe Z sur ladite distance prédéterminée, et une LED (25) qui peut être activée lorsque lesdits premiers et lesdits deuxièmes contacts entrent en contact mutuel.

5. Machine de mesure manuelle de coordonnées tridimensionnelles selon la revendication 3, dans laquelle un moyen (31) de prévention d'erreur est prévu pour supprimer des données définissant le déplacement de ladite sonde (7) par rapport à la pièce lorsque le ladite bague coulissante se déplace par rapport à l'organe d'axe Z sur la distance prédéterminée.

6. Machine de mesure manuelle de coordonnées tridimensionnelles selon la revendication 5, dans laquelle ledit moyen (31) de prévention d'erreur comprend des premiers contacts fixes (32A) prévus sur ledit adaptateur pour sonde, des deuxièmes contacts (33B) prévus sur ladite bague coulissante, les contacts étant positionnés de manière à entrer en contact mutuel lorsque la bague coulissante se déplace sur une distance prédéterminée par rapport à l'organe d'axe Z, et un circuit (34) d'interface de signal tactile pour supprimer les données définissant le déplacement de la sonde lorsque lesdits contacts entrent en contact mutuel.

7. Machine de mesure manuelle de coordonnées tridimensionnelles selon l'une quelconque des revendications précédentes, dans laquelle l'axe de ladite bague coulissante (15) et maintenu approximativement parallèle à l'axe Z pendant son déplacement.
